# EUROPEAN PATENT SPECIFICATION

(11) **EP 0 715 786 B1**
(45) Date of publication and mention of the grant of the patent: **08.04.1998**
(21) Application number: 94923790.3
(22) Date of filing: 15.08.1994
(51) Int. Cl.: H04B 7/08, H04Q 7/30

(54) **BASE STATION EQUIPMENT USING DIVERSITY RECEPTION**
BASISSTATIONSANLAGE UNTER VERWENDUNG VON DIVERSITYEMPFANG
EQUIPEMENT D'UNE STATION DE BASE UTILISANT LA RECEPTION EN DIVERSITE

(30) Priority: 27.08.1993 GB 9317892
(43) Date of publication of application: 12.06.1996
(73) Proprietor: NOKIA TELECOMMUNICATIONS OY, 02150 Espoo (FI)
(72) Inventor: LAWRENCE, Thomas, William, John, Cambridge CB4 3QF (GB)
(74) Representative: Morton, Colin David
(86) International application number: GB9401786
(87) International publication number: WO9506367

(56) References cited:
- US-A- 4 694 484

## Description

This invention relates to radio communication systems.

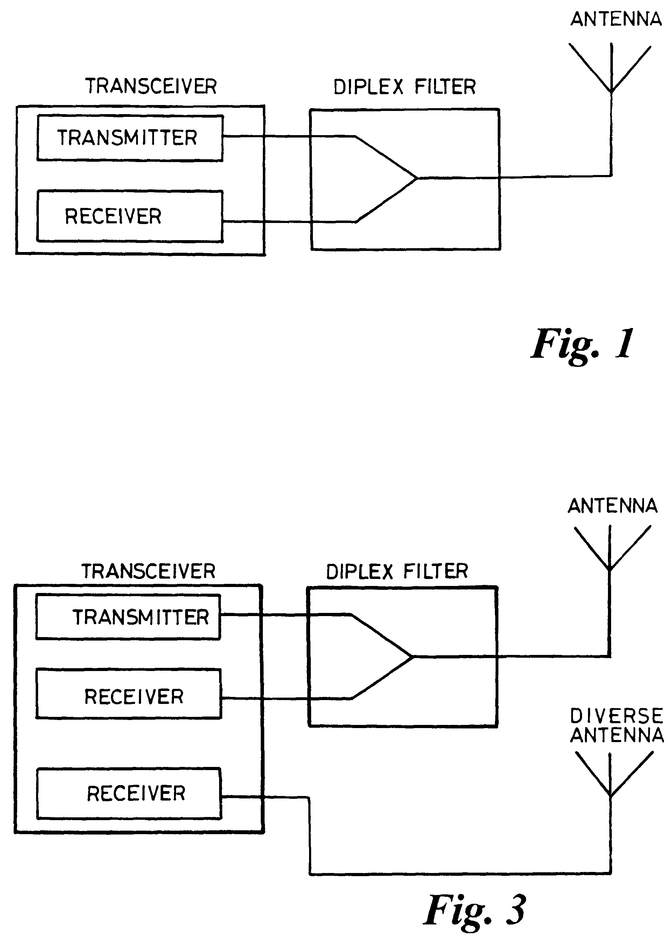

Base stations for duplex radio communication, such as for GSM (Group Systeme Mobile) cellular systems, commonly use a single antenna for transmission and reception of radio signals where the transmit and receive radio signals have separate and distinct frequency allocations by utilising a diplex filter to separate the frequencies of the transmitted and received signals. This is illustrated in Figure 1 of the accompanying drawings.

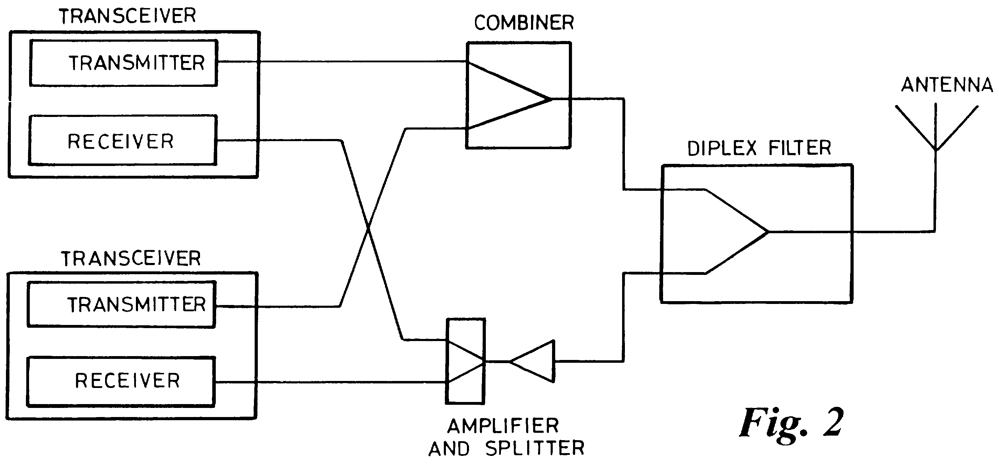

When a second carrier signal is required to be transmitted using the same frequency allocation as the first signal described above and using the same antenna it is common practice to utilise a 3dB combiner to connect the two signals to the same antenna, as illustrated in Figure 2 of the accompanying drawings. This method of combination limits the production of intermodulation products which might interfere with the reception of wanted signals. Typically more than half of the power of each signal is dissipated in the 3dB combiner and is not usefully transmitted which results in a reduced range of effective communication. This is typically overcome by increasing the power of each signal to allow for the power dissipated in the combiner or accepting a reduced size of cell, ie the area covered by the transmitter.

This invention provides a way of utilising elements typically used in a duplex communication system to provide low loss combination of two transmit signals over a broad band of frequencies. This allows more efficient use of generated signal power which permits either greater range of effective communication with existing generated power, thus requiring fewer transmitters to cover a given area, or reduced generated power for the same area coverage, thus requiring less energy and less costly transmitter design.

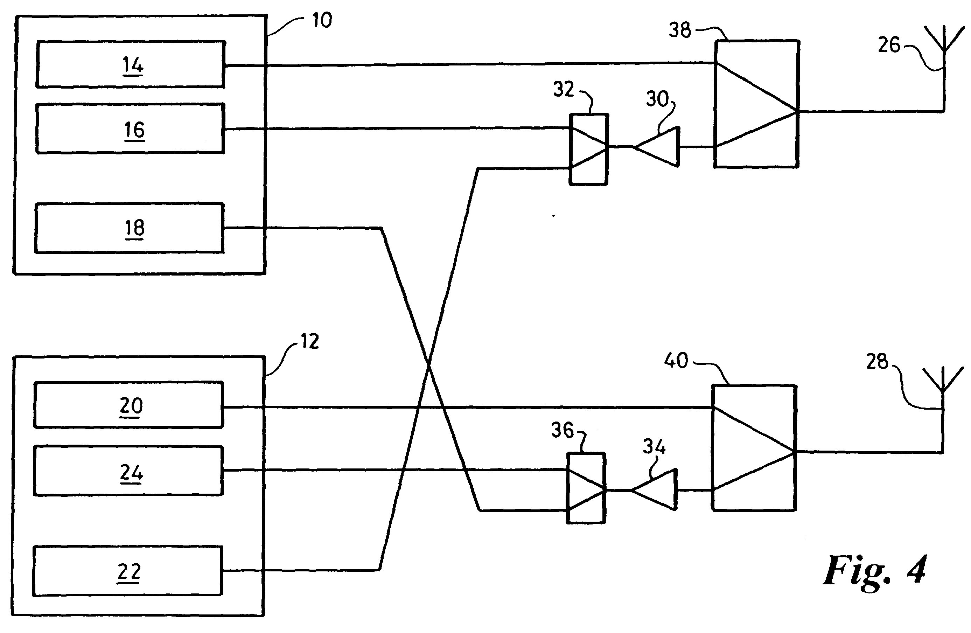

A second antenna sited near to but separate from the main antenna is commonly connected to a second receiver to provide a second diversity received signal which when considered in addition to the main received signal increases the likelihood of having adequate reception. Figure 3 shows a known system employing such antenna diversity.

US-A-4694484 discloses a cellular radio telephone system. Figure 10 thereof shows a base station including six transmitters respectively serving six sectors each having a corresponding antenna, so each sector has only one transmit antenna. A corresponding receiver may be connected to an antenna of its own sector and to an antenna of a neighbouring sector so as to provide reception diversity.

According to the invention there is provided a base station capable of communicating with mobile handsets in a cellular radio telephone system, the base station comprising two transceivers serving the same cell, namely a first transceiver having a first transmitter and a second transceiver having a second transmitter, a first filter connected to a main antenna for communication with handsets in said cell and a second filter connected to a diversity antenna providing diversity of the received signal from handsets in said cell, the first filter supplying transmit signals from the first transmitter to the main antenna and the second filter supplying transmit signals from the second transmitter to the diversity antenna.

Preferably, the first filter supplies, through a first amplifier and power splitter, a main receive signal to respective main receivers in the first and second transceivers, and the second filter supplies, through a second amplifier and power splitter, a diversity receive signal to respective diversity receivers in the first and second transceivers.

The principle of this invention is to transmit the two signals without losing useful power in a broadband 3dB combiner. This is preferably done by using a diplex filter to apply the second signal to be transmitted to the diversity antenna which is commonly used for reception only. The loss in the diplex filter is typically less than the loss in the 3dB combiner and so more power is available for transmission in the antenna. Also since the two transmitted signals are not present in the same signal path of the transmitting equipment there is less opportunity for intermodulation products to be generated.

The invention will now be further described with reference to Figure 4 of the accompanying drawings which shows a block circuit diagram of a preferred base station (of a duplex radio communication system) in accordance with the present invention.

The base station of Figure 4 has two transceivers 10, 12 operating in TDMA (time-division multiple access). The TDMA system architecture conforms to the GSM standard, using eight time slots per frame, the transmission rate therefore being eight times the coding rate. The transceivers 10 and 12 operate at different frequencies but with their transmit and receive slots in synchronism.

The transceiver 10 has a transmitter 14, a main receiver 16 and a diversity receiver 18. Similarly, the transceiver 12 has a transmitter 20, a main receiver 22 and a diversity receiver 24.

The base station has a main antenna 26 and a diversity antenna 28 for radio communication with mobile handsets in the cell served by the base station. A main receive path includes a first amplifier 30 and power splitter 32, and a diversity receive path includes a second amplifier 34 and power splitter 36. The transmit signal from the transmitter 14 to the antenna 26, and the main receive signal from the antenna 26, pass through a first diplex filter 38. Similarly, the transmit signal from the transmitter 20 to the antenna 28, and the diversity receive signal from the antenna 28, pass through a second diplex filter 40. Hence, the diversity antenna 28 is employed also as a transmitter.

In the case of a multi-cell system, the base station of Figure 4 is repeated for each sector.

## Claims

1. A base station capable of communicating with mobile handsets in a cellular radio telephone system, the base station comprising two transceivers (10, 12) serving the same coverage area, namely a first transceiver (10) having a first transmitter (14) and a second transceiver (12) having a second transmitter (20), a first filter (38) connected to a main antenna (26) for communication with handsets in said cell and a second filter (40) connected to a diversity antenna (28) providing diversity of the received signal from handsets in said cell, the first filter (38) supplying transmit signals from the first transmitter (14) to the main antenna (26) and the second filter (40) supplying transmit signals from the second transmitter (20) to the diversity antenna (28).

2. A base station according to claim 1, wherein the first filter (38) supplies, through a first amplifier (30) and power splitter (32), a main receive signal to respective main receivers (16, 22) in the first and second transceivers, and the second filter (40) supplies, through a second amplifier (34) and power splitter (36), a diversity receive signal to respective diversity receivers (18, 24) in the first and second transceivers.

3. A base station according to claim 1 or 2, wherein the first filter (38) and the second filter (40) take the form of diplex filters.

4. A base station according to any of the preceding claims and operating in time division multiple access (TDMA).

## Patentansprüche

1. Eine Basisstation zur Nachrichtenverbindung mit mobilen Handgeräten in einer zellförmig aufgebauten Radiotelefonanlage, wobei die Basisstation zwei das gleiche Gebiet abdeckende Sender/Empfänger (10, 12), nämlich einen ersten Sender/Empfänger (10) mit einem ersten Sender (14) und einen zweiten Sender/Empfänger (12) mit einem zweiten Sender (20), ein an eine Hauptantenne (26) angeschlossenes erstes Filter (38) zur Nachrichtenverbindung mit Handgeräten in der Zelle und ein an eine Diversity-Antenne (28) angeschlossenes zweites Filter (40) zum Ausbilden einer Diversität des von den Handgeräten empfangenen Signales in der Zelle aufweist, das erste Filter (38) Sendesignale vom ersten Sender (14) der Hauptantenne (26) und das zweite Filter (40) Sendesignale vom zweiten Sender (20) der Diversity-Antenne (28) zuführt.

2. Eine Basisstation nach Anspruch 1, wobei das erste Filter (38) über einen ersten Verstärker (30) und einen Leistungsteiler (32) ein Hauptempfangssignal den jeweiligen Hauptempfängern (16, 22) in dem ersten und dem zweiten Sender/Empfänger und das zweite Filter (40) über einen zweiten Verstärker (34) und einen Leistungsteiler (36) ein Diversity-Empfangssignal den jeweiligen Diversity-Empfängern (18, 24) im ersten und zweiten Sender/Empfänger zuführt.

3. Eine Basisstation nach Anspruch 1 oder 2, wobei das erste Filter (38) und das zweite Filter (40) die Form von Diplex-Filtern aufweisen.

4. Eine Basisstation nach irgendeinem der vorhergehenden Ansprüche und mit einer Betriebsweise mit Zeit-Divisions-Vielfachzugriff (time division multiple access) (TDMA).

## Revendications

1. Une station de base susceptible de communiquer avec des combinés mobiles dans un système de téléphone cellulaire par radio, la station de base comprenant deux émetteurs-récepteurs (10, 12) desservant la même zone de couverture, à savoir un premier émetteur-récepteur (10) incluant un premier émetteur (14) et un deuxième émetteur-récepteur (12) incluant un deuxième émetteur (20), un premier filtre (38) connecté à une antenne principale (26) pour communiquer avec des combinés de ladite cellule et un deuxième filtre (40) connecté à une antenne de diversité (28) qui réalise une diversité du signal reçu à partir des combinés dans ladite cellule, le premier filtre (38) envoyant des signaux d'émission à partir du premier émetteur (14) vers l'antenne principale (26) et le deuxième filtre envoyant des signaux d'émission à partir du deuxième émetteur (20) vers une antenne de diversité (28).

2. Une station de base selon la revendication 1, dans laquelle le premier filtre (38) envoie, par un premier amplificateur (30) et un premier répartiteur de puissance (32), un signal principal de réception à des récepteurs principaux respectifs (16, 22) du premier et du deuxième émetteurs-récepteurs, et le deuxième filtre (40) envoie, par un deuxième amplificateur (34) et un deuxième répartiteur de puissance (36) un signal de réception en diversité à des récepteurs respectifs (18, 24) de diversité des premier et deuxième émetteurs-récepteurs.

3. Une station de base selon la revendication 1 ou 2, dans laquelle le premier filtre (38) et le deuxième filtre (40) prennent la forme des filtres diplex.

4. Une station de base selon l'une quelconque des revendications précédentes et fonctionnant en accès multiple par répartition dans le temps (TDMA).
